# EUROPEAN PATENT APPLICATION

(11) **EP 3 789 351 A1**
(43) Date of publication of application: **10.03.2021**
(21) Application number: 19195351.2
(22) Date of filing: 04.09.2019
(51) Int. Cl.: C02F 3/10, C02F 1/28, C02F 3/34, C02F 101/16, C02F 101/10, C02F 101/30, C02F 101/34, C02F 101/32, C02F 101/38

(54) **WATER DEODORIZER AND METHOD FOR MAKING IT**

(71) Applicant: Chin, Wen-Lung, Taoyuan City (TW); Lin, Chih-Chieh, Taoyuan City (TW)
(72) Inventor: Chin, Wen-Lung, Taoyuan City (TW); Lin, Chih-Chieh, Taoyuan City (TW)
(74) Representative: Patentanwälte Hosenthien-Held und Dr. Held

(57) **Abstract**

A method includes preparing a natural seashell, calcining the seashell at a high temperature to clear organic substances from the seashell, processing and reacting the seashell at a high temperature, grinding and screening the seashell, and mixing the ground seashell with microorganism strains to form a water deodorizer. The water deodorizer includes a powder having a porous structure, and multiple microorganism strains mixed with the powder. The powder has an interior provided with a plurality of pores. The powder is made of a natural seashell which is processed at a high temperature, and is ground and screened to form the porous structure. The microorganism strains are filled in the pores of the powder and cover outer surfaces of the pores of the powder. The powder has a diameter of 0.4-10 *µ*m.

## Description

The present invention relates to a water deodorizing technology and, more particularly, to a water deodorizer (or deodorant) and the method for making it.

Most of the odors in the water source are produced by different chemicals. There are several reasons for the general occurrence of water odor. In general, the odors in the water source are caused by the following factors, including (1) the odor produced by chemical matters in the nature, (2) the odor produced by household sewage, industrial wastewater or the like, (3) the odor produced by microorganisms, (4) the odor produced by aquatic algae, and (5) the odor produced by chlorination treatment. Traditional deodorization methods include (1) water cleaning method, (2) activated carbon adsorption method, (3) ozone oxidation method, (4) catalytic combustion method, and (5) biological deodorization method. The biological deodorization method utilizes the metabolism of microorganisms to degrade odor substances, and is suitable for removing odor substances generated by sewage treatment plants. At present, there are mainly three kinds of biological deodorization methods applied in sewage treatment plants: biological filter method, washing activated sludge method, and aerated activated sludge method.

A conventional water deodorizing method comprises directly discharging water from the entire water area (such as the pond or the like) and then injecting clean water into the water area. However, such a method wastes the water source and easily breaks the ecosystem of the water area. Another conventional water deodorizing method comprises using a chemical agent, such as chlorine or the like, to sterilize and disinfect the water area. However, the chlorine is toxic and easily endangers the human health. In addition, the chlorine is not environmentally friendly, and easily causes a pollution. Another conventional water deodorizing method comprises using an ultraviolet device to irradiate the water area for a sterilizing purpose. However, the ultraviolet lamp has a determined longevity, has a high cost of replacement, and increases the electricity cost. Another conventional water deodorizing method comprises blowing air into the water area for an aerating purpose. However, such a method needs to use an energy source, thereby increasing the cost.

The primary objective of the present invention is to provide a water deodorizer which has a high specific surface area and has a better adsorption capacity, such that the water deodorizer is served as an adsorbent with a specified requirement.

In accordance with the present invention, there is provided a method for making a water deodorizer, comprising preparing a natural seashell, calcining the seashell at a high temperature to clear organic substances from the seashell, processing and reacting the seashell at a high temperature, grinding and screening the seashell, and mixing the ground seashell with microorganism strains to form a water deodorizer.

In accordance with the present invention, there is further provided a water deodorizer comprising a powder having a porous structure, and multiple microorganism strains mixed with the powder. The powder has an interior provided with a plurality of pores. The powder is made of a natural seashell which is processed at a high temperature, and is ground and screened to form the porous structure. The microorganism strains are filled in the pores of the powder and cover outer surfaces of the pores of the powder. The powder has a diameter of 0.4-10 *µ*m.

Further benefits and advantages of the present invention will become apparent after a careful reading of the detailed description with appropriate reference to the accompanying drawings.

In the drawings:
FIG. 1 is a flow chart of a method for making a water deodorizer in accordance with the preferred embodiment of the present invention.
FIG. 2 is a schematic enlarged view of a water deodorizer in accordance with the preferred embodiment of the present invention.

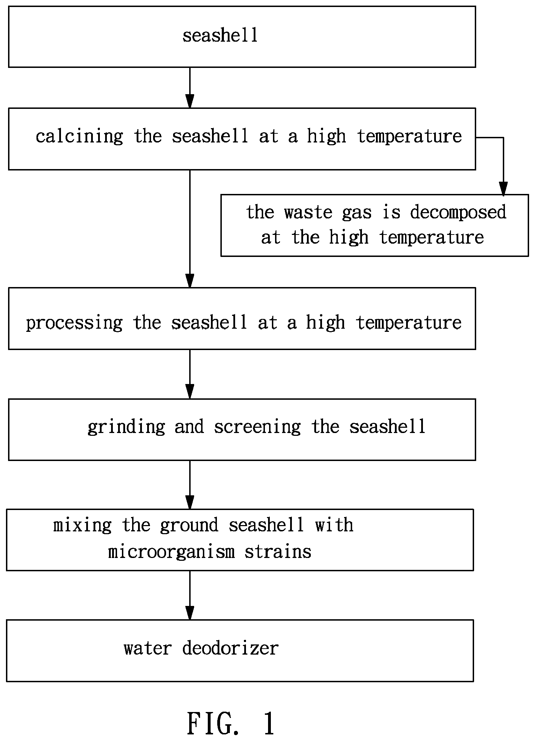

Referring to the drawings and initially to FIG. 1, a method for making a water deodorizer in accordance with the preferred embodiment of the present invention comprises preparing a natural seashell, calcining the seashell at a high temperature to clear organic substances from the seashell, processing and reacting the seashell at a high temperature, grinding and screening the seashell, and mixing the ground seashell with microorganism (or microbial) strains (or cultures) to form a water deodorizer. A waste gas is produced after the seashell is calcined at the high temperature to clear organic substances. The waste gas is decomposed at the high temperature and is drained out when reaching the emission standard.

In the preferred embodiment of the present invention, the water deodorizer has a porous structure.

In the preferred embodiment of the present invention, the water deodorizer has a diameter of 0.4-10 *µ*m.

In the preferred embodiment of the present invention, the water deodorizer has a high specific surface area and has a better adsorption capacity. In addition, the water deodorizer is produced without using an energy. Further, the water deodorizer is made of the natural seashell without causing a chemical pollution. Thus, the water deodorizer is used for attaching and breeding microorganisms, so as to deodorize the water.

In the preferred embodiment of the present invention, the seashell is the shell of a shellfish, an oyster, a clam, a scallop or the like.

In the preferred embodiment of the present invention, the seashell is calcined at the temperature of 800-1200 °C.

In the preferred embodiment of the present invention, the organic substances include flesh, membrane, gel or the like, that remains in the seashell.

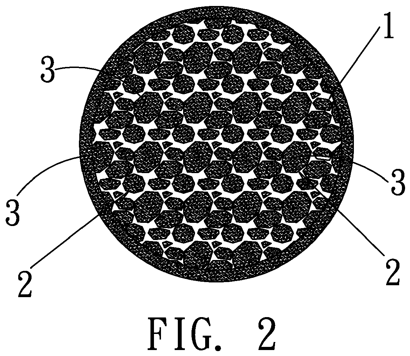

Referring to FIG. 2, a water deodorizer in accordance with the preferred embodiment of the present invention comprises a powder 1 having a porous structure, and multiple microorganism strains 3 mixed with the powder 1. The powder 1 has an interior provided with a plurality of pores 2. The powder 1 is made of a natural seashell which is processed at a high temperature, and is ground and screened to form the porous structure. The microorganism strains 3 are filled in the pores 2 of the powder 1 and cover outer surfaces of the pores 2 of the powder 1.

In the preferred embodiment of the present invention, the powder 1 has a diameter of 0.4-10 *µ*m.

In the preferred embodiment of the present invention, the powder 1 has a high specific surface area and has a better adsorption capacity. In addition, the powder 1 is produced without using an energy. Further, the powder 1 is made of the natural seashell without causing a chemical pollution. Thus, the powder 1 is used for attaching and breeding microorganisms, so as to deodorize the water.

In general, the special odor (or smell) comes from diverse sources, including aliphatic hydrocarbons, aromatic hydrocarbons, aliphatic hydrocarbon oxygenated derivatives, oxygenated hydrocarbons, halogen-containing hydrocarbons, reduced sulfur compounds, and reduced nitrogen compounds. The smell sources also includes oxygenated metabolites secreted by various algae, such as 2-methyl isoborneol or isobutanol (MIB) and geosmin (GEO). The large-scale growth of algae is the source of environmental water eutrophication. When the number of algae increases, the concentration of related odor metabolites also increases, thereby resulting in various unpleasant odors. MIB and GEO are the most common odor metabolites of algae. In addition, microcystis aeruginosa produces *β* -cyclocitral and β-ionone, which cause the odor.

In the preferred embodiment of the present invention, the microorganism strains 3 are selected from micrococcus spp. (spp. means the genus includes multiple undefined species), flavobacterium spp., brevibacterium spp. and pseudomonas sp. (sp. means the genus includes one undefined species), and are used to reduce the 2-methyl isoborneol (MIB). Preferably, micrococcus spp., flavobacterium spp., brevibacterium spp. and pseudomonas sp., are used to reduce the MIB of about 98.4%, 96.3%, 95.0% and 92.8%.

In the preferred embodiment of the present invention, the microorganism strains 3 are selected from sphingopyxis sp., and are used to reduce the geosmin (GEO) and the algae toxin, such that the concentration of the algae toxin in the water is below the safety index.

In the preferred embodiment of the present invention, the microorganism strains 3 are selected from pseudomonas sp., and are used to clear hydrogen sulfide (H₂S) effectively, and to reduce phenol and benzene drained from the factory wastewater. Preferably, pseudomonas sp. can clear hydrogen sulfide (H₂S) of about 96%, and to reduce phenol and benzene of about 90%.

In the preferred embodiment of the present invention, the microorganism strains 3 are selected from thiobacillus, and are used to reduce the hydrogen sulfide (H₂S), thiol, thioether, and phenol.

Preferably, thiobacillus is used to reduce the hydrogen sulfide (H₂S) of about 98%, thiol of about 95%, and thioether of about 99.99%.

In the preferred embodiment of the present invention, the microorganism strains 3 are selected from bordetella sp., zymomonas mobilis, and xanthomonas sp., and are used to reduce the hydrogen sulfide (H₂S).

In the preferred embodiment of the present invention, the microorganism strains 3 are selected from pseudomonas sp. and cupriavidus sp., and are used to reduce the indole. Preferably, pseudomonas sp. is used to reduce the indole of about 98%.

In the preferred embodiment of the present invention, the microorganism strains 3 are selected from brevibacterium spp., and are used to reduce the ammonia and hydrogen sulfide (H₂S).

In conclusion, the powder 1 is served as a carrier of the special deodorizing microorganism strains 3, such that the special deodorizing microorganism strains 3 are carried to the target position, so as to providing a deodorizing effect, and to reduce the algae toxin.

Accordingly, the powder 1 has a high specific surface area to provide a carrier with larger reaction area. In addition, the powder 1 has a porous structure with a plurality of pores 2 to provide an excellent lodging environment. Further, the carrier contains many microelements, to provide rich nutrient to the microorganism strains 3. Further, the carrier catches the suspending particles in the water during the sinking process. Further, the carrier regulates the PH value, so as to improve the acid water. Further, the classes of the microorganism strains 3 are adjusted quickly according to different conditions of the water areas, thereby enhancing the versatility of the water deodorizer. Further, the method only needs to mix the microorganism strains 3 without having to add special chemical agents. Further, the microorganism strains 3 are filled in and covered by the carrier, such that the microorganism strains 3 are not damaged by the environmental harmful factors, and reach the target position successively, to enhancing the deodorizing effect.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the scope of the invention.

## Claims

1. A method for making a water deodorizer, comprising:
preparing a natural seashell;
calcining the seashell at a high temperature to clear organic substances from the seashell;
processing and reacting the seashell at a high temperature;
grinding and screening the seashell; and
mixing the ground seashell with microorganism strains to form a water deodorizer.

2. A water deodorizer comprising:
a powder (1) having a porous structure; and
multiple microorganism strains (3) mixed with the powder;
wherein:
the powder has an interior provided with a plurality of pores (2);
the powder is made of a natural seashell which is processed at a high temperature, and is ground and screened to form the porous structure;
the microorganism strains are filled in the pores of the powder and cover outer surfaces of the pores of the powder; and
the powder has a diameter of 0.4-10 *µ*m.

3. The water deodorizer of claim 2, wherein the microorganism strains are selected from micrococcus spp., flavobacterium spp., brevibacterium spp. and pseudomonas sp., and are used to reduce the 2-methyl isoborneol (MIB).

4. The water deodorizer of claim 2, wherein the microorganism strains are selected from sphingopyxis sp., and are used to reduce the geosmin (GEO) and the algae toxin.

5. The water deodorizer of claim 2, wherein the microorganism strains are selected from pseudomonas sp., and are used to clear hydrogen sulfide (H₂S) effectively, and to reduce phenol and benzene.

6. The water deodorizer of claim 2, wherein the microorganism strains are selected from thiobacillus, and are used to reduce the hydrogen sulfide (H₂S), thiol, thioether, and phenol.

7. The water deodorizer of claim 2, wherein the microorganism strains are selected from bordetella sp., zymomonas mobilis, and xanthomonas sp., and are used to reduce the hydrogen sulfide (H₂S).

8. The water deodorizer of claim 2, wherein the microorganism strains are selected from pseudomonas sp. and cupriavidus sp., and are used to reduce the indole.

9. The water deodorizer of claim 2, wherein the microorganism strains are selected from brevibacterium spp., and are used to reduce the ammonia and hydrogen sulfide (H₂S).
